# FASCICULE DE BREVET EUROPEEN

(11) **EP 4 011 592 B1**
(45) Date de publication et mention de la délivrance du brevet: **27.11.2024**
(21) Numéro de dépôt: 21214249.1
(22) Date de dépôt: 14.12.2021
(51) Int. Cl.: B29C 45/14, F16B 37/12, B29C 69/00, B29C 65/48, B29C 65/00, B29L 1/00, B29C 65/02

(54) **DISPOSITIF D'INSERT POUR PIÈCE DE DESTINATION EN MATÉRIAU SYNTHÉTIQUE MOULÉE OU THERMOFORMÉE**
EINSATZVORRICHTUNG FÜR EIN GEFORMTES ODER THERMOGEFORMTES ZIELWERKSTÜCK AUS SYNTHETISCHEM MATERIAL
INSERT DEVICE FOR A DESTINATION PART MADE OF MOULDED OR THERMOFORMED SYNTHETIC MATERIAL

(30) Priorité: 14.12.2020 FR 2013127
(43) Date de publication de la demande: 15.06.2022
(73) Titulaire: Ride, Christophe, 67370 Wiwersheim (FR)
(72) Inventeur: Ride, Christophe, 67370 Wiwersheim (FR)
(74) Mandataire: Rhein, Alain

(56) Documents cités:
- EP-A1- 3 338 988
- DE-A1- 102012 007 546
- DE-A1- 102015 013 655
- DE-A1- 3 623 126
- US-A1- 2017 348 794
- US-A1- 2020 096 036

## Description

La présente invention concerne un dispositif d'insert pour pièce de destination en matière synthétique, notamment thermoformée ou moulée.

La présente invention concerne le domaine de la fabrication de pièces en matière synthétique, notamment conçues par thermoformage ou moulage. Elle a trait, tout particulièrement, aux inserts qu'il est nécessaire d'associer à de telles pièces, par exemple des inserts de fixation de type métallique susceptibles de contribuer à une fonction de fixation, que ce soit pour solidariser cette pièce en matière synthétique sur une structure support ou pour l'équiper d'une pièce quelconque.

Il est d'ores et déjà connu d'équiper des pièces en matière synthétique moulée d'inserts par intégration de ces derniers dans le moule d'injection. Cette solution rend plus contraignante le procédé de moulage, voire la conception du moule lui-même. Par ailleurs, se pose systématiquement le problème de la parfaite imprégnation de ces inserts par la matière synthétique au cours du remplissage du moule, ceci en évitant toute formation de bulle d'air.

Une telle solution est décrite, par exemple, dans les documents de l'état de la FR 3.011.760, DE 3623126, EP 3.338.988.

Evidemment, une intégration d'un insert en cours de conception d'une pièce en matière synthétique thermoformée n'est pas envisageable.

En effet, le procédé de fabrication par thermoformage consiste à chauffer un matériau plastique sous forme de plaque, afin de le ramollir et le déformer dans une thermoformeuse. Celle-ci est équipée de matrices de moule et permet, par pressage, aspiration ou autre, de conférer à cette plaque en matière plastique la forme de la pièce souhaitée.

Aussi, les inserts sont très généralement collés sur de telles pièces en matière synthétique thermoformées et la tenue mécanique de leur liaison est dépendante de la résistance à l'arrachement entre l'insert et la colle, d'une part, et entre cette dernière et la pièce en matière synthétique, d'autre part.

Cela signifie que le choix de la colle n'est pas anodin dans la mesure où elle doit être compatible, à la fois, au matériau composant l'insert, souvent de type métallique, et la matière synthétique de la pièce recevant l'insert.

Par ailleurs, la colle elle-même doit être en mesure d'offrir une résistance au cisaillement à la hauteur des efforts qui peuvent être imprimés à un insert au travers d'un organe de fixation, par exemple d'une vis de fixation. A titre d'exemple, lors du serrage d'une telle vis de fixation dans un insert rapporté par collage sur une pièce thermoformée, la colle doit être à la hauteur du couple de serrage imprimé à cette vis de fixation.

À la lecture de ce qui précède, l'on comprend bien que plus la colle est amenée à être sollicitée entre l'insert et la pièce en matière synthétique, plus elle doit être performante et plus elle est coûteuse généralement.

En comparaison, une liaison par soudure est d'un coût de revient bien moins élevé. Cependant, elle ne peut habituellement être mise en oeuvre en raison de l'incompatibilité des matériaux composant les inserts avec ces pièces en matière synthétique.

A noter que l'on connaît également par les documents DE 10 2015 013655 et US 2017/348794 d'autres type de dispositif d'insert, mais qui ne répondent pas davantage aux inconvénients précités.

C'est dans le cadre d'une démarche inventive qu'il a été imaginé que la résistance mécanique qu'offre la liaison entre un insert et une pièce en matière synthétique ne soit pas nécessairement dépendante, exclusivement, de leur liaison par soudure ou collage, mais également au travers d'une coopération mécanique qui ne dépend pas de l'opération de moulage de la pièce destinée à être équipée de cet insert.

D'ailleurs, on a encore pensé à une solution qui puisse combiner les deux, à savoir une liaison par collage ou soudure et une liaison mécanique.

Ainsi, l'invention concerne un dispositif d'insert, pour pièce de destination en matière synthétique moulée ou thermoformée, comprenant un insert, de type insert de fixation ou similaire, comprend une embase en forme de pastille en matière synthétique surmoulée sur l'insert, ladite embase comportant au moins une face d'application pourvue, en sailli, d'une protubérance de section générale inférieure à celle de ladite embase, caractérisé en ce que la protubérance est de section de forme polygonale dont au moins un côté défini une facette d'appui conçue pour, en coopération avec une facette d'appui idoine d'une ouverture ou d'un logement au niveau d'une pièce de destination, définir des moyens d'indexation et de blocage en rotation de l'insert par rapport à ladite pièce.

Contrairement à une pièce de grande taille que l'on vient surmouler sur un insert, le surmoulage de cette embase en forme de pastille sur l'insert peut être exécuté en garantissant une liaison intime, sans bulle d'air entre le matériau surmoulé composant l'embase et les parois de l'insert avec lesquelles ce matériau est amenée à coopérer.

D'ailleurs, les parois de l'insert surmoulée par l'embase peuvent présenter de multiples aspérités, tels que picots, languettes, filetage, brides, etc. pour créer une liaison mécanique de grande résistance à l'arrachement et/ou à la torsion, lorsque noyées intimement dans le matériau surmoulé.

De manière essentielle, celui-ci peut être choisi en fonction du matériau composant la pièce de destination en matière synthétique.

Ainsi, si la pièce de destination est conçue en matière synthétique thermoplastique l'embase surmoulée sur l'insert peut être conçue en une matière thermoplastique identique ou compatible pour permettre une liaison par soudure.

Dans le cas de pièces de destination en matière synthétique thermodurcissable, l'embase dans laquelle est surmoulé l'insert peut être conçue en un matériau compatible par collage.

Ainsi, cette protubérance de section polygonale peut-être défini pour venir s'engager dans un logement ou une ouverture de section polygonale ajustée dans une pièce de destination en matière synthétique pour indexer et bloquer en rotation cet insert par rapport à cette dernière.

L'invention concerne encore un procédé pour équiper d'un dispositif d'insert selon l'invention une pièce de destination en matière synthétique obtenue par moulage ou thermoformage, consistant :
- A réaliser dans ladite pièce, au droit d'implantation du dispositif d'insert selon l'invention, une ouverture ou un logement de section ajustée à la protubérance surmontant l'embase ;
- A positionner le dispositif d'insert sur ladite pièce par engagement de ladite protubérance dans l'ouverture ou le logement ajusté ;
- A fixer le dispositif d'insert sur ladite pièce par collage ou soudure

Les avantages découlant de la présente invention consistent en ce qu'il est possible d'équiper une pièce en matériau synthétique d'un insert dont la tenue mécanique, notamment sous l'effet d'une contrainte en rotation appliquée à cet insert, ne dépend plus de la seule résistance à l'arrachement d'une colle ou d'une soudure.

Un autre avantage consiste en ce que l'insert peut être positionné avec une grande précision sur la pièce de destination. En effet, en cas de collage ou soudure, la précision dépend de la minutie et du temps consacrés à l'opération de soudure ou collage. Le moindre glissement des pièces les unes par rapport aux autres avant solidification de la colle ou de la soudure entraine des défauts de positionnement et des difficultés de montage ultérieurement.

Dans la solution selon l'invention, cette précision dépend exclusivement de l'attention portée, par exemple, à l'usinage dans une pièce de destination thermoformée, de l'ouverture ou du logement destiné à accueillir la protubérance de l'embase du dispositif d'insert. Dans le cas d'une pièce moulée, cette ouverture ou ce logement peut être issu de l'opération de moulage, ceci avec une très grande précision.

D'autres buts et avantagent de la présente invention apparaîtront cours de la description qui va suivre se rapportant à un exemple de réalisation donné à titre indicatif et non limitatif.

La compréhension de cette description sera facilitée en se référant au dessin joint en annexe dans lequel :
[Fig.1] représente de manière schématisée et en plan d'un exemple de dispositif d'insert selon l'invention.
[Fig.2] est une représentation schématisée et en élévation du dispositif d'insert illustré dans la figure 1.
[Fig.3] est une représentation schématisée et en coupe de ce dispositif d'insert illustré dans les figures 1 et 2, ici associé à une pièce de destination en matière synthétique.

En référence à ces figures, la présente invention concerne un dispositif d'insert 1 comprenant un insert 2 lequel peut adopter différentes formes de réalisation et être conçu en des matériaux divers : métallique, matière plastique, composite, etc.

Un tel insert 2 peut, à titre d'exemple, remplir une fonction de fixation sans que l'invention ne soit limitée à cette dernière.

Dans les figures, cet insert 2 a été illustré sous forme d'une douille, comprenant un alésage 3 avec un taraudage 4.

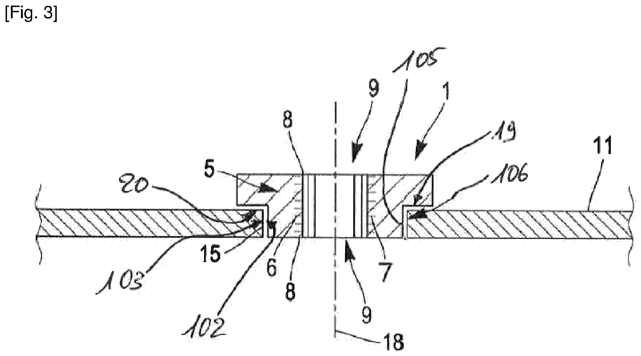

Sur sa paroi périphérique extérieur 5, cet insert 1 peut être pourvu d'un certain nombre d'aspérités 6 destinées à favoriser son ancrage dans un matériau surmoulé. Ces aspérités 6 peuvent prendre la forme de picots, de languettes, voire d'un filetage plus ou moins grossier 7, comme on peut le distinguer dans la représentation en coupe de la figure 3, pour favoriser une liaison mécanique entre cette paroi périphérique extérieur 5 et ce matériau surmoulé.

À noter, encore, qu'une bride 8, à l'une ou l'autre extrémité 9 de la douille, peut, elle aussi, définir une telle aspérité, pour favoriser la tenue à l'arrachement de l'insert 2 dans un matériau surmoulé.

Tout particulièrement, selon l'invention, le dispositif d'insert 1 comporte une embase 10 en forme de pastille en matière synthétique surmoulée sur l'insert 2.

Comme on peut le voir dans les figures, cette embase 10 s'étend dans un plan 17 sensiblement perpendiculaire l'axe 18 de l'insert 2, ici sous forme d'une douille dans l'exemple de réalisation visible sur ces figures.

Une telle embase 10 comporte une face d'application 100 destinée à venir en applique sur une pièce de destination 11 en matière synthétique que l'on souhaite équiper d'un dispositif d'insert 1.

De manière avantageuse, la matière synthétique surmoulée au-dessus de l'insert 1 pour former l'embase 10 peut être choisie en corrélation avec le matériau composant ladite pièce en matière synthétique 11.

En particulier, si la matière synthétique de la pièce 11 de destination est de type thermoplastique, l'embase 10 peut être conçue en une matière thermoplastique identique, tout le moins compatible.

Dans un tel cas, cette compatibilité peut être choisie telle qu'il soit possible de relier l'insert 1 à la pièce en matière synthétique 11 par soudure. Mais on peut encore choisir un matériau composant l'embase 10 pour une meilleure compatibilité en vue du collage.

L'invention n'est nullement limitée à cette notion de compatibilité de la matière synthétique composant l'embase 10 du dispositif d'insert 1 avec la matière synthétique de la pièce destination 11 en vue d'un collage ou d'une soudure.

Ainsi, cette matière synthétique composant l'embase 10 peut être choisi également pour répondre à des propriétés mécaniques particulières.

À titre d'exemple, cette matière synthétique de l'embase 10 peut-être de résistance mécanique plus importante que celle de la pièce de destination 11 pour une tenue mécanique améliorée ou, au contraire, de résistance à la rupture plus faible pour favoriser, en cas de choc ou autre, une rupture contrôlée au niveau de l'embase 10 plutôt qu'à hauteur de la pièce en matière synthétique 11.

Finalement, on observera que cette matière synthétique composant l'embase 10 peut être de type thermoplastique, thermodurcissable ou composite.

Selon l'invention, l'embase 10 comporte, au niveau d'une face d'application 100 une protubérance 101 comportant au moins une facette d'appui 102. Celle-ci est conçue pour définir des moyens d'indexation et de blocage en rotation de ce dispositif d'insert 1, en coopération avec une facette d'appui idoine 103 que comporte une ouverture 15 ou un logement au niveau d'une pièce de destination 11.

Avantageusement, cette ouverture 15 ou ce logement est conçue pour accueillir, à la manière d'une pièce mâle par rapport à une pièce femelle, la protubérance 101. Cette ouverture 15 ou ce logement est de section ajustée à la protubérance 101.

Selon l'invention, la section 104 de la protubérance 101 est de forme polygonale dont au moins un côté 105 défini une telle facette d'appui 102. Avantageusement, chacun des côtés 105 de cette protubérance 101 de forme polygonale défini une facette d'appui 102 conçue pour coopérer avec une facette d'appui idoine 103 correspondant aux côtés 106 d'une ouverture 15 ou d'un logement prévu pour accueillir cette protubérance 101 au niveau de la pièce de destination 11.

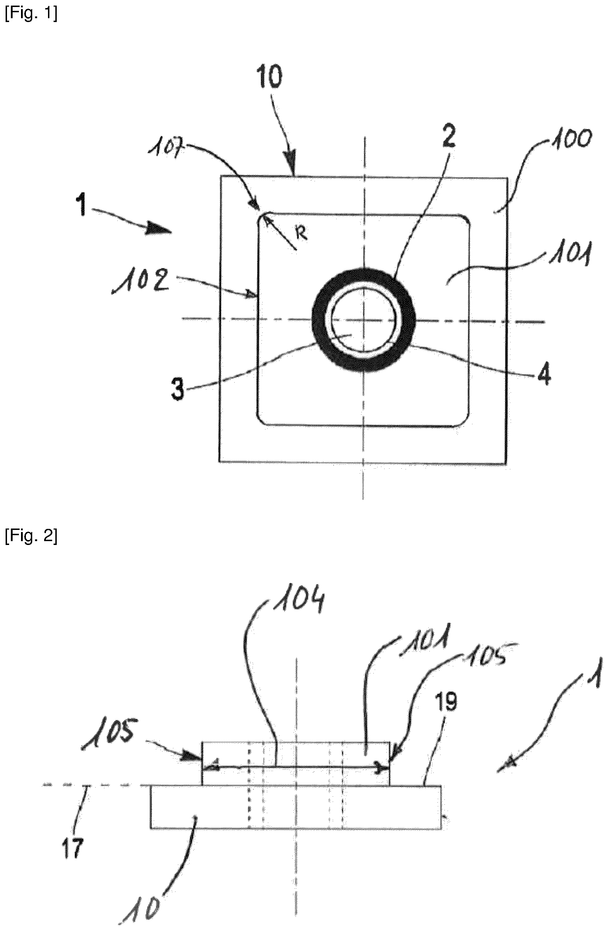

Ainsi, comme illustré selon un exemple de réalisation dans les figures 1 à 3, la protubérance 101 peut être définie au niveau de la face d'appui 100 de l'embase 10 sous forme d'un parallélépipède, par exemple rectangle ou carré, conçue pour venir s'engager dans une ouverture 15 de section parallélépipédique rectangle ou carré ajustée sur la pièce de destination 11.

Selon un mode de réalisation préférentiel, l'angle 107 entre deux côtés successifs 105 d'une telle protubérance 101 polygonale, parallélépipédique ou non, est à rayon de courbure R compris entre 1 et 5mm. Celui-ci peut être ajusté au rayon de courbure (non visible) entre deux côtés 106 d'une ouverture 15 on d'un logement notamment obtenu par usinage dans une pièce de destination 11. En effet, s'il est éventuellement possible d'obtenir une arrête vive entre deux côtés d'un évidement polygonale issu de moulage, ce n'est pas le cas lorsque cet évidement découle d'un usinage. De plus, cet angle arrondi entre les côtés 105 de la protubérance 101 facile dans tous les cas son emboîtement dans un telle ouverture 15 ou un logement dans une pièce de destination 11.

Selon encore une autre particularité, la protubérance 101 peut être conçu avec une légère dépouille au-dessus de l'embase 10, non seulement pour favoriser le démoulage du dispositif d'insert 1 lors de sa conception, mais, là encore pour faciliter son engagement dans une ouverture 15 ou un logement ajusté dans une pièce de destination 11.

Une telle coopération de forme conduit à créer une liaison mécanique entre l'embase 10 du dispositif d'insert 1 avec la pièce de destination 11 susceptible de s'opposer à un effort de torsion qui viendrait s'exercer entre eux. Elle peut également constituer des moyens détrompeurs, donc d'indexation, de position du dispositif d'insert 1 sur la pièce destination 11. En somme une telle concordance de forme, conduit à définir des moyens d'indexation dans le plan 17 de l'embase 10 du dispositif d'insert 1 par rapport à une pièce de destination 11.

Avantageusement, la protubérance 101 en sailli sur la face d'appui 100 de l'embase 10 est de section générale inférieure à celle de cette embase 10. Cela permet de définir au moins en partie en périphérie de cette protubérance 101 un rebord d'appui 19 au niveau de la face d'appui 100 de cette embase 10.

A noter que l'embase 10 peut adopter une section de forme différente de celle de la protubérance 101. Elle peut être définie ronde, par exemple. Mais dans un mode de réalisation avantageux, cette forme de la section de l'embase 10, tout en étant plus grande, est identique à celle de la protubérance 101, laquelle est implantée co-axialement sur la face d'appui 100 de cette embase 10. Cela permet de définir autour de ladite protubérance 101 un rebord d'appui 19 de largeur sensiblement constante.

Un tel rebord d'appui 19 joue avantageusement le rôle de moyen d'indexation dans une direction axiale 18 de la positon du dispositif d'insert 1 par rapport à une pièce de destination 11, en étant conçu pour prendre appui sur cette dernière en périphérie 20 de l'ouverture 15 ou du logement accueillant la protubérance 101, comme illustré dans la figure 3.

Ainsi, le procédé pour équiper d'un dispositif d'insert 1 selon l'invention une pièce en matière synthétique 11, que celle-ci soit obtenue par moulage ou thermoformage, consiste à réaliser dans ladite pièce 11, au droit d'implantation du dispositif d'insert 1, une ouverture 15 ou un logement de section ajustée à la protubérance 101 surmontant l'embase 10 de ce dispositif d'insert 1.

On vient ensuite positionner le dispositif d'insert 1 sur ladite pièce 11 par engagement de ladite protubérance 101 dans l'ouverture 15 ou le logement ajusté, d'une part, en amenant au moins une facette d'appui 102 en coopération avec une facette d'appui 103 idoine que comporte ladite ouverture 15 ou ledit logement et, d'autre part, en repoussant le rebord d'appui 19 en applique contre la périphérie 20 de cette 103 ouverture 15 ou ce logement.

Dans une dernière opération on procède au collage ou à la soudure du dispositif d'insert 1 sur ladite pièce en matière synthétique 11. A noter à ce sujet, qu'en cas de collage, il est préférentiellement effectué une opération d'encollage de l'embase 10 du dispositif d'insert 1 et/ou de la pièce 11.

Par ailleurs dans le cas particulier d'une liaison par soudure, l'embase 10 surmoulée que comporte le dispositif d'insert 1 est conçu en un matériau compatible à la pièce de destination11 pour permettre cette liaison par soudure.

L'invention vient répondre de manière avantageuse aux problèmes que pose l'association d'un insert, par exemple de type métallique, à une pièce en matière synthétique. En effet, le procédé à mettre en oeuvre pour assurer l'équipement d'une telle pièce en matière synthétique d'un insert est considérablement facilité, sans compter les gains obtenus en termes de performance mécanique.

La présente invention vient donc répondre efficacement aux inconvénients résultant des solutions que propose l'état antérieur de la technique.

## Revendications

1. Dispositif d'insert, pour pièce de destination (11) en matière synthétique moulée ou thermoformée, comprenant un insert (2), de type insert de fixation ou similaire, comprend une embase (10) en forme de pastille en matière synthétique surmoulée sur l'insert (2), ladite embase (10) comportant au moins une face d'application (100) pourvue, en sailli, d'une protubérance (101) de section générale inférieure à celle de ladite embase (10), **caractérisé en ce que** la protubérance (101) est de section (104) de forme polygonale dont au moins un côté (105) défini une facette d'appui (102) conçue pour, en coopération avec une facette d'appui idoine (103) d'une ouverture (15) ou d'un logement au niveau d'une pièce de destination (11), définir des moyens d'indexation et de blocage en rotation du dispositif d'insert (1) par rapport à ladite pièce (11).

2. Dispositif d'insert selon la revendication 1, **caractérisé en ce que** l'insert (2) comporte sur sa paroi périphérique extérieure (5) des aspérités (6) d'ancrage au matériau surmoulé composant l'embase (10).

3. Dispositif d'insert selon l'une quelconque des revendications précédentes, **caractérisé en ce que** l'embase (10) est conçue en une matière thermoplastique.

4. Dispositif d'insert selon l'une quelconque des revendications 1 ou 2, **caractérisé en ce que** l'embase (10) est conçue en une matière thermodurcissable.

5. Dispositif d'insert selon l'une quelconque des revendications 1 ou 2, **caractérisé en ce que** l'embase (10) est conçue en une matière composite.

6. Dispositif d'insert selon l'une quelconque des revendications précédentes, **caractérisé en ce que** la protubérance (101) est de section parallélépipédique, notamment rectangle ou carré, conçue pour venir s'engager dans une ouverture (15) ou un logement de section parallélépipédique ajustée sur la pièce de destination (11).

7. Dispositif d'insert selon l'une quelconque des revendications précédentes, **caractérisé en ce qu'**au moins en partie en périphérie de la protubérance (101) de section générale inférieure à celle de l'embase (10), ladite protubérance (101) délimite un rebord d'appui (19) au niveau de la face d'appui (100) de cette embase (10).

8. Dispositif d'insert selon l'une quelconque des revendications précédentes, **caractérisé en ce que** la forme de la section de l'embase (10), tout en étant plus grande, est identique à la forme de la section de la protubérance (101), laquelle est implantée co-axialement sur la face d'appui (100) de cette embase (10) pour définir, autour de ladite protubérance (101) et sur ladite face d'appui (101), un rebord d'appui (19) de largeur sensiblement constante.

9. Dispositif d'insert selon la revendication 6 ou 8, **caractérisé en ce que** deux côtés successifs (105) de la protubérance (101) polygonale, parallélépipédique ou non, sont reliés par un angle (107) à rayon de courbure (R) compris entre 1 et 5mm.

10. Procédé pour équiper d'un dispositif d'insert (1), selon l'une quelconque des revendications précédentes, une pièce en matière synthétique (11), moulée ou thermoformée, **caractérisé en ce que** :
• On réalise par moulage ou usinage dans ladite pièce de destination (11), au droit d'implantation du dispositif d'insert (1), une ouverture (15) ou un logement de section ajustée à la protubérance (101) surmontant l'embase (10) de ce dispositif d'insert (1) ;
• On positionne le dispositif d'insert (1) sur ladite pièce de destination (11) par engagement de ladite protubérance (101) dans l'ouverture 15 ou le logement ajusté, d'une part, en amenant au moins une facette d'appui (102) de la protubérance (101) en coopération avec une facette d'appui (103) idoine que comporte ladite ouverture (15) ou ledit logement et, d'autre part, en repoussant le rebord d'appui (19) en applique contre la périphérie (20) de cette ouverture (15) ou ce logement ;
• On procède au collage ou à la soudure du dispositif d'insert (1) sur ladite pièce en matière synthétique (11).

11. Procédé selon la revendication 10, **caractérisé en ce qu'**on effectue une opération d'encollage de l'embase (10) du dispositif d'insert (1) et/ou de la pièce (11) préalablement à l'étape de positionnement du dispositif d'insert (1) sur ladite pièce de destination (11), en cas de fixation par collage. 1

## Patentansprüche

1. Einsatzvorrichtung für Bestimmungsteil (11) aus geformtem oder thermogeformtem Kunststoff, umfassend einen Einsatz (2), vom Typ Befestigungseinsatz oder dergleichen, mit einer Basis (10) in Form einer Platte aus synthetischem Material, die auf den Einsatz (2) aufgeformt ist, wobei die Basis (10) mindestens eine Anlegefläche (100) umfasst, die mit einem vorstehenden Höcker (101) mit allgemein kleinerem Querschnitt als der von Basis (10) versehen ist, **dadurch gekennzeichnet, dass** der Höcker (101) einen Abschnitt (104) mit polygonaler Form aufweist, dessen mindestens eine Seite (105) eine Auflagefläche (102) definiert, die ausgestaltet ist, um im Zusammenwirken mit einer geeigneten Auflagefläche (103), einer Öffnung (15) oder einer Aufnahme bei einem Bestimmungsteil (11) Mittel zum Einrasten und Blockieren der Drehung der Einsatzvorrichtung (1) relativ zu dem Teil (11) zu definieren.

2. Einsatzvorrichtung nach Anspruch 1, **dadurch gekennzeichnet, dass** der Einsatz (2) auf seiner Außenumfangswand (5) Unebenheiten (6) zur Verankerung mit dem aufgeformten Material aufweist, aus dem die Basis (10) besteht.

3. Einsatzvorrichtung nach einem der vorstehenden Ansprüche,
**dadurch gekennzeichnet, dass** die Basis (10) aus einem thermoplastischen Material ausgestaltet ist.

4. Einsatzvorrichtung nach einem der Ansprüche 1 oder 2,
**dadurch gekennzeichnet, dass** die Basis (10) aus einem duroplastischen Material ausgestaltet ist.

5. Einsatzvorrichtung nach einem der Ansprüche 1 oder 2,
**dadurch gekennzeichnet, dass** die Basis (10) aus einem Verbundwerkstoff ausgestaltet ist.

6. Einsatzvorrichtung nach einem der vorstehenden Ansprüche,
**dadurch gekennzeichnet, dass** der Höcker (101) einen quaderförmigen, insbesondere rechteckigen oder quadratischen Querschnitt aufweist, der dazu ausgelegt ist, in eine an das Bestimmungsteil (11) angepasst Öffnung (15) oder eine Aufnahme mit quaderförmigem Querschnitt einzugreifen.

7. Einsatzvorrichtung nach einem der vorstehenden Ansprüche,
**dadurch gekennzeichnet, dass** zumindest teilweise am Umfang des Höckers (101) mit allgemein kleinerem Querschnitt als der von der Basis (10) der Höcker (101) eine Auflagekante (19) auf Höhe der Auflagefläche (100) dieser Basis (10) begrenzt.

8. Einsatzvorrichtung nach einem der vorstehenden Ansprüche,
**dadurch gekennzeichnet, dass** die Form des Querschnitts der Basis (10) zwar größer, aber gleich wie die Form des Querschnitts des Höckers (101) ist, der koaxial auf der Auflagefläche (100) dieser Basis (10) installiert ist, sodass er um den Höcker(101) herum und an der Auflagefläche (101) eine Auflagekante (19) mit im Wesentlichen konstanter Breite definiert.

9. Einsatzvorrichtung nach Anspruch 6 oder 8,
**dadurch gekennzeichnet, dass** zwei aufeinanderfolgende Seiten (105) des polygonalen Höckers (101), ob quaderförmig oder nicht, durch einen Winkel (107) mit einem Krümmungsradius (R) zwischen 1 und 5 mm verbunden sind.

10. Verfahren zum Bestücken eines geformten oder thermogeformten Kunststoffteils (11) mit einer Einsatzvorrichtung (1) nach einem der vorstehenden Ansprüche, **dadurch gekennzeichnet, dass:**
• eine Öffnung (15) oder eine Aufnahme mit einem an den die Basis (10) dieser Einsatzvorrichtung (1) überragenden Höcker (101) angepassten Querschnitt durch Formen oder Bearbeiten im Bestimmungsteil (11) an der Stelle zum Einsetzen der Einsatzvorrichtung (1) hergestellt wird;
• die Einsatzvorrichtung (1) an dem Bestimmungsteil (11) durch Eingriff des Höckers (101) in die Öffnung (15) oder die angepasste Aufnahme positioniert wird, einerseits indem mindestens eine Auflagefläche (102) des Höckers (101) zum Zusammenwirken mit einer geeigneten Auflagefläche (103), welche die Öffnung (15) oder die Aufnahme umfasst, gelenkt wird, und andererseits die Auflagekante (19) anliegend an den Umfang (20) dieser Öffnung (15) oder dieser Aufnahme zurückgeschoben wird;
• die Einsatzvorrichtung (1) danach mit dem Kunststoffteil (11) verklebt oder verschweißt wird.

11. Verfahren nach Anspruch 10, **dadurch gekennzeichnet, dass** im Falle der Befestigung durch Kleben ein Vorgang des Anklebens der Basis (10) der Einsatzvorrichtung (1) und/oder des Teils (11) vor dem Schritt der Positionierung der Einsatzvorrichtung (1) auf dem Bestimmungsteil (11) durchgeführt wird.

## Claims

1. An insert device for a destination part (11) made of molded or thermoformed synthetic material, comprising an insert (2), of the attachment insert type or the like, comprising a base (10) in the form of a synthetic material pad overmolded onto the insert (2), said base (10) comprising at least one application face (100) provided, projecting therefrom, with a protuberance (101) of smaller general cross-section than that of said base (10), **characterized in that** the protuberance (101) has a polygonal cross-section (104), at least one side (105) of which defines a bearing facet (102) designed, in cooperation with a suitable bearing facet (103) of an opening (15) or recess in a destination part (11), to define means for indexing and rotationally locking the insert device (1) relative to said part (11).

2. The insert device according to claim 1, **characterized in that** the insert (2) comprises, on its outer peripheral wall (5), asperities (6) for anchoring to the overmolded material making up the base (10).

3. The insert device according to any one of the preceding claims,
**characterized in that** the base (10) is made of a thermoplastic material.

4. The insert device according to any one of claims 1 or 2,
**characterized in that** the base (10) is made of a thermosetting material.

5. The insert device according to any one of claims 1 or 2,
**characterized in that** the base (10) is made of a composite material.

6. The insert device according to any one of the preceding claims, **characterized in that** the protuberance (101) is parallelepipedic in cross-section, in particular rectangular or square, designed to engage in an opening (15) or recess of parallelepipedic cross-section fitted on the destination part (11).

7. The insert device according to any one of the preceding claims, **characterized in that,** at least partly at the periphery of the protuberance (101) of smaller general cross-section than that of the base (10), said protuberance (101) delimits a bearing rim (19) at the bearing face (100) of this base (10).

8. The insert device according to any one of the preceding claims, **characterized in that** the cross-sectional shape of the base (10), while being larger, is identical to the cross-sectional shape of the protuberance (101), which is coaxially implanted on the bearing face (100) of this base (10) to define, around said protuberance (101) and on said bearing face (101), a bearing rim (19) of substantially constant width.

9. The insert device according to claim 6 or 8, **characterized in that** two successive sides (105) of the polygonal, parallelepipedic or non-parallelepipedic protuberance (101) are connected by an angle (107) with a radius of curvature (R) of between 1 and 5 mm.

10. A method for fitting an insert device (1), according to any one of the preceding claims, to a molded or thermoformed synthetic part (11),
**characterized in that:**
• An opening (15) or recess is made by molding or machining in said destination part (11), at the location where the insert device (1) is implanted, having a cross-section adapted to the protuberance (101) surmounting the base (10) of this insert device (1);
• The insert device (1) is positioned on said destination part (11) by engaging said protuberance (101) in the opening 15 or the adapted recess, on the one hand, by bringing at least one bearing facet (102) of the protuberance (101) into engagement with a suitable bearing facet (103) of said opening (15) or said recess and, on the other hand, by pushing the bearing rim (19) against the periphery (20) of said opening (15) or said recess;
• The insert device (1) is glued or welded to said synthetic part (11).

11. The method according to claim 10, **characterized in that** the base (10) of the insert device (1) and/or the part (11) is glued prior to the step of positioning the insert device (1) on said target destination part (11), in the case of adhesive bonding.
